# EUROPEAN PATENT APPLICATION

(11) **EP 4 350 867 A1**
(43) Date of publication of application: **10.04.2024**
(21) Application number: 21955321.1
(22) Date of filing: 30.08.2021
(51) Int. Cl.: H01M 50/342

(54) **BATTERY MODULE, BATTERY PACK AND ELECTRONIC DEVICE**

(71) Applicant: Huawei Digital Power Technologies Co., Ltd., Shenzhen, Guangdong 518043 (CN)
(72) Inventor: ZHANG, Yezheng, Shenzhen, Guangdong 518129 (CN); ZHU, Jing, Shenzhen, Guangdong 518129 (CN); ZHONG, Zheng, Shenzhen, Guangdong 518129 (CN)
(74) Representative: Gill Jennings & Every LLP
(86) International application number: PCT/CN2021/115267
(87) International publication number: WO 2023/028739

(57) **Abstract**

This application provides a battery module, a battery pack, and an electronic device. The battery module includes a module housing, a safety compartment, electrical assemblies, and explosion-proof structures. The safety compartment, the explosion-proof structures, and at least a part of the electrical assemblies are located outside the module housing and are located on a same side of the module housing. The explosion-proof structure includes a connection end and a pressure relief end that are disposed opposite to each other. The connection end is connected to the module housing, and the pressure relief end is located in the safety compartment. In this application, the pressure relief end of the explosion-proof structure is located in the safety compartment, the safety compartment is a sealed cavity, and the pressure relief end is disposed in the sealed safety compartment, so that a high-temperature combustible fluid from the pressure relief end flows into the safety compartment, to prevent the high-temperature combustible fluid from flowing to another position of the module housing to burn the electrical assembly. The pressure relief end of the explosion-proof structure is separated from the electrical assembly by using the safety compartment, to avoid a secondary safety accident.

## Description

### TECHNICAL FIELD

This application relates to the field of battery technologies, and specifically, to a battery module, a battery pack, and an electronic device.

### BACKGROUND

Lithium-ion batteries are widely used in products such as communication base stations, data centers, commercial energy storage, and electric vehicles due to advantages of the lithium-ion batteries such as high energy density, a long service life, no memory effect, and a low self-discharge rate. However, fire and explosion accidents of the lithium-ion batteries are often reported, and a safety problem of the lithium-ion batteries poses a serious threat to life and property safety of users. A fault of a battery may induce a large amount of combustible gas to be generated in the battery, and therefore internal pressure of the battery is significantly increased. To prevent a battery explosion, currently, an explosion-proof valve is designed at a top cover part of the lithium-ion battery. When the internal pressure of the battery exceeds preset opening pressure of the explosion-proof valve, the explosion-proof valve may be opened to release a combustible fluid in the battery. Ejection of the combustible fluid may cause a systematic safety risk. A large amount of combustible gas and organic liquid are instantly ejected from the battery, and sparking of an electrode terminal ignites the combustible gas and liquid, causing safety accidents such as a fire or even an explosion of the lithium-ion battery. In addition, an organic electrolyte ejected from the battery may cause a short circuit of an electrical circuit, and therefore a more serious secondary safety accident is caused. Propagation paths of the ejected gas and flames are uncontrollable, and therefore a spread path of battery thermal runaway is uncontrollable.

### SUMMARY

This application provides a battery module that may prevent a combustible fluid released from an explosion-proof structure from causing a secondary safety accident.

According to a first aspect, this application provides a battery module. The battery module includes a module housing, a safety compartment, electrical assemblies, and explosion-proof structures. The safety compartment, the explosion-proof structures, and at least a part of the electrical assemblies are located outside the module housing and are located on a same side of the module housing. The explosion-proof structure includes a connection end and a pressure relief end that are disposed opposite to each other. The connection end is connected to the module housing, and the pressure relief end is located in the safety compartment.

The battery module further includes a cell and an electrolyte. The cell and the electrolyte are located in the module housing. A fault of the battery module may induce the cell and the electrolyte to generate a large amount of combustible gas, and therefore internal pressure of the module housing is increased. The explosion-proof structure is configured to: when the internal pressure of the module housing exceeds preset opening pressure, release a high-temperature combustible fluid in the module housing from the pressure relief end of the explosion-proof structure, to avoid an explosion caused by excessively high internal pressure of the module housing. The pressure relief end of the explosion-proof structure is one end at which the high-temperature combustible fluid flows out of the explosion-proof structure. The high-temperature combustible fluid includes at least one of high-temperature gas or the electrolyte. The safety compartment is a compartment with enclosed parts except the pressure relief end. When the high-temperature combustible fluid is not dangerous in the safety compartment, the safety compartment may be opened to remove a low-temperature fluid that is not dangerous.

In an implementation, the electrical assembly includes at least one of an electrode terminal, an electrical connection wire, a power wire, a sampling wire, or a sampling terminal. The electrode terminal is electrically connected to the cell, and is configured to lead out a current generated by the cell. When a part of the electrical assembly and the explosion-proof structure are located on a same side of the module housing, the high-temperature combustible fluid from the explosion-proof structure may burn the electrical assembly on the same side, causing a secondary safety accident. In some cases, the high-temperature combustible fluid from the explosion-proof structure may further burn the power wire, the sampling wire, or the sampling terminal in the module housing, and therefore there is a high risk.

The cell includes a positive plate, a negative plate, and a separator. The separator is disposed between the positive plate and the negative plate to insulate the positive plate from the negative plate. The positive plate is coated with a positive material, and the negative plate is coated with a negative material. The positive plate, the separator, and the negative plate are wound around an axial direction to form a cell body. A gap exists in the cell body, and the gap extends in the axial direction. A positive tab and a negative tab are provided at an end part that is of the cell body and that is in the axial direction. The positive tab is connected to the positive plate, and the negative tab is connected to the negative plate. The electrode terminal includes a positive terminal and a negative terminal. The positive terminal and the negative terminal are distributed at two ends of the explosion-proof structure in a first direction. In an implementation, the first direction is a width direction of the battery module, the positive plate is electrically connected to the positive terminal through the positive tab, and the negative plate is electrically connected to the negative terminal through the negative tab. When the fault of the battery module may induce the cell and the electrolyte to generate a large amount of combustible gas, the large amount of combustible gas is discharged from the axial direction of the cell body. In an implementation, the axial direction of the cell body is parallel to a second direction of the battery module, and the second direction is a height direction of the battery module. To enable the high-temperature combustible fluid to be smoothly discharged from the module housing, the explosion-proof structure is usually disposed on an end face that is of the cell body and that is in the axial direction, the positive tab, the negative tab, and the electrode terminal are also located on the end face that is of the cell body and that is in the axial direction, and the explosion-proof structure and the electrode terminal are usually disposed on a same end face of the cell body. In this way, the high-temperature combustible fluid in the module housing may be quickly discharged through the gap in the middle of the cell body in the axial direction. Therefore, an explosion risk is reduced.

When the explosion-proof structure and the electrode terminal are disposed on different sides, for example, the electrode terminal is disposed on a cover of the module housing, the explosion-proof structure is disposed on a side plate of the module housing, and the side plate is perpendicular to the cover. In this case, an inner side of the side plate includes a side face of the cell body. When a fault occurs in the battery module, and the high-temperature combustible fluid is generated, the high-temperature combustible fluid flows out from the end face of the cell body, turns to the side face of the cell body, and then is discharged through the explosion-proof structure on the side plate. In this manner, a discharge path of the high-temperature combustible fluid is not smooth, and an internal explosion risk of the battery module is increased.

If the electrode terminal is disposed on the side plate of the module housing, and the explosion-proof structure is disposed on the cover of the module housing, the positive tab and the negative tab that are on the end face of the cell body need to be connected to the positive terminal and the negative terminal that are on the side plate through lead wires. However, adding the lead wires in the module housing may also increase the internal explosion risk. When the high-temperature combustible fluid flows in the module housing and touches the lead wires, the explosion risk is increased.

In this application, the electrode terminal and the explosion-proof structure are disposed on the same side, so that the explosion risk may be reduced. However, when the electrode terminal and the explosion-proof structure are disposed on the same side, the high-temperature combustible fluid from the explosion-proof structure may flow to the electrode terminal, and sparking of the electrode terminal ignites high-temperature combustible gas and liquid, causing safety accidents such as a fire or even an explosion of the battery module. In this application, the electrode terminal and the explosion-proof structure are disposed on the same side, to reduce the explosion risk. In addition, to avoid the secondary safety accident caused by the high-temperature combustible fluid and the electrical assembly (for example, the electrode terminal), the pressure relief end of the explosion-proof structure is located in the safety compartment. The safety compartment is a sealed cavity, and the pressure relief end is disposed in the sealed safety compartment, so that the high-temperature combustible fluid from the pressure relief end flows into the safety compartment, to prevent the high-temperature combustible fluid from flowing to another position of the module housing to burn the electrical assembly. The pressure relief end of the explosion-proof structure is separated from the electrical assembly by using the safety compartment, to avoid the secondary safety accident.

In a possible implementation, the module housing is provided with a first through hole that penetrates through the module housing. The connection end of the explosion-proof structure is disposed around the first through hole, and internal space of the explosion-proof structure communicates with the first through hole. That the connection end is disposed around the first through hole is that the connection end is located on a circumferential outer side of the first through hole. The internal space of the explosion-proof structure communicates with the first through hole, so that the high-temperature combustible fluid from the module housing enters the explosion-proof structure through the first through hole. Therefore, the high-temperature combustible fluid is effectively prevented from overflowing from a circumference of the first through hole, and the high-temperature combustible fluid from overflowing from a circumference of the first through hole is prevented from being in contact with the electrical assembly.

In some implementations, the connection end may be fastened to the module housing by welding.

In some implementations, the connection end may be fastened to the module housing by using a high-temperature-resistant sealant, to seal a gap between the connection end and the module housing.

If the explosion-proof structure is not disposed, and the safety compartment is directly disposed on the cover of the module housing, a compartment bottom plate that is of the module housing and that is adjacent to the safety compartment is provided with a second through hole. Axes of the first through hole and the second through hole coincide, so that an internal part of the module housing communicates with the safety compartment through the first through hole and the second through hole. However, because the electrode terminal has a specific height, there is a gap between the compartment bottom plate and the module housing. Therefore, it is difficult to fully fit the compartment bottom plate with the module housing, and when the high-temperature combustible fluid is ejected from the module housing, the high-temperature combustible fluid may flow out from the gap between the compartment bottom plate and the module housing. Further, the high-temperature combustible fluid may be in contact with the electrical assembly that is on the module housing to damage the electrical assembly. The high-temperature combustible fluid may further damage an electronic component around the module housing, for example, the power wire. In addition, because there is no blocking structure around the circumference of the first through hole, the high-temperature combustible fluid may further flow back to the first through hole and enter the battery module housing, causing the secondary safety accident.

If the electrode terminal is disposed on the side plate of the module housing, it is also difficult to fully fit the compartment bottom plate with the module housing, and there is still a gap at a location at which the first through hole is adjacent to the second through hole. When the high-temperature combustible fluid is ejected from the first through hole, some of the high-temperature combustible fluid may flow out from the gap F, and may be in contact with the electrical assembly that is on the module housing to damage the electrical assembly. In addition, the high-temperature combustible fluid may further flow back to the first through hole and enter the battery module housing, causing the secondary safety accident. Furthermore, in an implementation, a lead wire needs to be disposed between the cell body and the electrode terminal, and therefore, an internal explosion risk may be increased. However, in an implementation, the connection end of the explosion-proof structure is disposed around the first through hole, so that the high-temperature combustible fluid may be effectively prevented from overflowing from the circumference of the first through hole.

In a possible implementation, the module housing includes the cover. The electrical assemblies and the explosion-proof structures are disposed on the cover, and the explosion-proof structures and the cover are of an integrated structure. The explosion-proof structure and the cover are of the integrated structure, so that the gap between the connection end of the explosion-proof structure and the module housing is removed, and the high-temperature combustible fluid is prevented from overflowing from the circumference of the first through hole.

In an implementation, the battery module includes a plurality of independent battery cells. The plurality of battery cells are arranged in a third direction. The third direction is a length direction of the battery module. Each battery cell includes a cell sub-housing, a cell located in the cell sub-housing, and an electrolyte. The module housing includes a plurality of cell sub-housings, and each cell sub-housing includes a cell sub-cover. The plurality of cell sub-covers of the plurality of cell sub-housings form the cover of the module housing. Each cell sub-cover is provided with the explosion-proof structure, and each cell sub-cover and the explosion-proof structure on the cell sub-housing are of an integrated structure. In some implementations, the third direction is a width direction of the battery module, and the first direction is the length direction of the battery module.

In some implementations, the module housing includes the cover, a box frame, and a bottom plate. Two ends of the box frame are provided with openings that are respectively covered by the cover and the bottom plate. A plurality of spacers are provided in the box frame. The plurality of spacers divide the box frame into a plurality of accommodation space, and the cell and the electrolyte are disposed in each accommodation space. Two adjacent spacers, a part of the box frame between the two adjacent spacers, and the cell and the electrolyte that are in the accommodation space form the battery cell. The cover covers the opening of the box frame. In an implementation, the cell sub-covers of the plurality of battery cells are of an integrated structure, that is, the cover. The explosion-proof structure is disposed at a location of the cover corresponding to each accommodation space.

In a possible implementation, the safety compartment includes a compartment bottom plate adjacent to the module housing, a fire functional layer disposed on a surface that is of the compartment bottom plate and that is away from the module housing, and a second through hole that penetrates through the compartment bottom plate and the fire functional layer, and a part of the explosion-proof structure is located in the second through hole. The fire functional layer is configured to perform fire processing on high-temperature combustible gas, and includes at least one of functions of cooling the high-temperature combustible gas, extinguishing a fire, absorbing toxic gas, and the like.

In an implementation, that a part of the explosion-proof structure is located in the second through hole includes the pressure relief end of the explosion-proof structure extends from the second through hole and extends into internal space of the safety compartment. In other words, the pressure relief end is fully located in the internal space of the safety compartment, and the pressure relief end is higher than the second through hole. Due to blocking of the pressure relief end of the explosion-proof structure, the high-temperature combustible fluid from the pressure relief end does not flow back to the second through hole after falling onto the fire functional layer, and is effectively blocked by the pressure relief end of the explosion-proof structure in the safety compartment.

In some implementations, that a part of the explosion-proof structure is located in the second through hole includes the pressure relief end of the explosion-proof structure is located in the second through hole and does not extend into the internal space of the safety compartment. In other words, the pressure relief end is surrounded by a material of the fire functional layer. When the high-temperature combustible fluid is discharged from the pressure relief end, in a process of discharging from the second through hole to the safety compartment, fire processing may be performed on the high-temperature combustible fluid by the material of the fire functional layer that is on an inner wall of the second through hole, and then the high-temperature combustible fluid enters the safety compartment and falls onto a surface of another fire functional layer to be processed. In this way, fire processing may be effectively performed on the high-temperature combustible fluid. If some of the high-temperature combustible fluid flow back to the second through hole, because the inner wall of the second through hole is also provided with the material of the fire functional layer, the high-temperature combustible fluid may be processed by the material of the fire functional layer again when flowing through the inner wall of the second through hole, and therefore, a secondary safety accident caused by the backflow is avoided.

In some implementations, the fire functional layer includes filter particles and energy-absorbing particles, and the filter particles are distributed between the energy-absorbing particles. The filter particles are filter material particles that can absorb harmful gas and convert the harmful gas into harmless gas, and the energy-absorbing materials are energy-absorbing material particles that can convert high-temperature gas into low-temperature gas. The amount of the filter particles and the amount of the energy-absorbing particles may be set as required. In some implementations, a material of the filter particles and a material of the energy-absorbing particles may be directly mixed, and then solidified to form the fire functional layer.

In a possible implementation, the battery module further includes a breakable structure, and the breakable structure is located on an end face of the pressure relief end of the explosion-proof structure. The second through hole, the connection end of the explosion-proof structure, and the internal space of the explosion-proof structure communicate with each other sequentially. The breakable structure explodes after being impacted by pressure, and after the breakable structure explodes, a fluid in the module housing is ejected into the safety compartment through the pressure relief end. The breakable structure is a structure that may explode when being impacted by pressure. When the battery module works normally, the breakable structure blocks the end face of the pressure relief end of the explosion-proof structure. When internal pressure of the battery module increases, the high-temperature combustible fluid breaks the breakable structure, and the high-temperature combustible fluid is ejected into the safety compartment.

In a possible implementation, the breakable structure includes a connection plate and a score located on the connection plate. A thickness of the score is less than a thickness of another part of the connection plate, and the thickness is a size in a direction perpendicular to the connection plate. The thickness is the size in the direction perpendicular to the connection plate, and when being impacted by pressure, the score may be broken to release the pressure.

In a possible implementation, the safety compartment includes a compartment bottom plate, a compartment top plate, and a box frame that is provided with openings at two ends in a second direction. The compartment bottom plate and the compartment top plate respectively cover the openings at the two ends of the box frame in the second direction. The compartment bottom plate is located on one side of the module housing in the second direction. The compartment bottom plate is provided with the second through hole that penetrates through the compartment bottom plate. The pressure relief end of the explosion-proof structure passes through the second through hole and extends into the safety compartment. The compartment bottom plate, the compartment top plate, the box frame, and the breakable structure can form enclosed space. When the breakable structure is not broken, the breakable structure blocks the pressure relief end of the explosion-proof structure. In this case, the compartment bottom plate, the compartment top plate, the box frame, and the explosion-proof structure form the enclosed space. When the breakable structure is broken by pressure, the high-temperature combustible fluid is released to the safety compartment. In this case, the pressure relief end is an inlet of the safety compartment, and another part of the safety compartment have no outlet, so that the high-temperature combustible fluid is accommodated in the safety compartment to avoid overflow. When the high-temperature combustible fluid is not dangerous after fire processing is performed on the high-temperature combustible fluid in the safety compartment, the compartment top plate of the safety compartment may be opened to remove a low-temperature fluid that is not dangerous.

In a possible implementation, the explosion-proof structure and the safety compartment are of an integrated structure. Specifically, the explosion-proof structure and the compartment bottom plate are of an integrated structure. The integrated structure may eliminate a gap between the explosion-proof structure and the compartment bottom plate, avoid leakage of the high-temperature combustible fluid, and improve structural strength.

In a possible implementation, the battery module further includes a breakable structure, and the breakable structure is located on an end face of the connection end of the explosion-proof structure. When the battery module works normally, the breakable structure blocks the end face of the connection end of the explosion-proof structure. When internal pressure of the battery module increases, after breaking the breakable structure, the high-temperature combustible fluid passes through internal space of the explosion-proof structure, and the high-temperature combustible fluid is ejected into the safety compartment from an outlet of the pressure relief end.

In a possible implementation, the battery module further includes a breakable structure, and the breakable structure is located on a surface of the module housing, and blocks the first through hole. In an implementation, an edge of the breakable structure is connected to a surface of a cover that is on a circumference of the first through hole, and the connection end of the explosion-proof structure surrounds an outer side of the thin film structure. When the internal pressure of the battery module increases, after breaking the breakable structure, the high-temperature combustible fluid passes through the internal space of the explosion-proof structure, and the high-temperature combustible fluid is ejected into the safety compartment from the outlet of the pressure relief end. The connection end of the explosion-proof structure is connected to the cover, so that the high-temperature combustible fluid from the first through hole cannot flow to an outer side of the explosion-proof structure. Therefore, a risk of burning an electrical assembly by the high-temperature combustible fluid may be reduced.

In a possible implementation, the electrical assemblies are located in an area between the safety compartment and the module housing. The electrical assembly may be connected to an external electronic component by using a connection wire, to implement an electrical connection between the module housing and the external electronic component. For example, when the electrical assembly is the electrode terminal, the electrode terminal is disposed on the cover, one end of the electrode terminal is electrically connected to an electrode plate that is in the battery unit by using a tab, and the other end of the electrode terminal is connected to a general electrode of the battery module by using the electrical connection wire, or is connected in series or in parallel to an electrode terminal that is in an adjacent battery unit.

In an implementation, the safety compartment fully covers the cover. Sizes of the safety compartment in the first direction and the third direction are the same as sizes of the cover in the first direction and the third direction, so that process preparation is simpler. An edge of the safety compartment is fastened to an edge of the cover, and a fastening manner includes fastening by using a buckle, a screw, an adhesive, or the like. Because the safety compartment is disposed above the electrical assembly, there is at least a size of the electronic assembly in the second direction between the safety compartment and the cover. In addition, space for placing the connection wire for connecting the electrical assembly to the outside needs to be reserved between the safety compartment and the electrical assembly, so that a gap between the safety compartment and the cover is larger. If the explosion-proof structure is not disposed, the high-temperature combustible fluid from the first through hole quickly flows to the electrical assembly to burn the electronic assembly, causing a secondary safety accident. However, in this application, the explosion-proof structure is disposed, so that the secondary safety accident may be avoided.

In a possible implementation, orthographic projections of the electrical assemblies on the module housing do not overlap an orthographic projection of the safety compartment on the module housing. In an implementation, the safety compartment is not located above the electrode terminal, and space is reserved for a connection wire of the electrode terminal.

In a possible implementation, the battery module further includes a cooling apparatus. The cooling apparatus is disposed outside the safety compartment, and is configured to cool the safety compartment. The cooling apparatus includes an air cooling apparatus or a liquid cooling apparatus. The liquid cooling apparatus includes a cooling pipe. Because the high-temperature combustible fluid may fall onto the compartment bottom plate after being ejected into the safety compartment, a temperature of the compartment bottom plate is high. In an implementation, the cooling pipe is arranged on a surface that is of the compartment bottom plate of the safety compartment and that is adjacent to the cover, to quickly cool the compartment bottom plate. In some implementations, the air cooling apparatus may be a fan, and may dissipate heat by blowing the safety compartment.

In a possible implementation, a liquid guiding groove is further provided on an inner surface of the compartment bottom plate. One end of the liquid guiding groove is provided adjacent to the explosion-proof structure, and the other end of the liquid guiding groove is provided away from the explosion-proof structure. After the high-temperature combustible fluid ejected from the pressure relief end of the explosion-proof structure falls onto the compartment bottom plate, the high-temperature combustible fluid flows in a direction away from the explosion-proof structure by using the liquid guiding groove, to prevent the high-temperature combustible fluid from gathering around the explosion-proof structure. Therefore, effect for performing fire processing on the high-temperature combustible fluid is improved. A quantity of the liquid guiding grooves and a shape of the liquid guiding groove are not limited, and may be specifically set according to an actual requirement.

According to a second aspect, this application further provides a battery pack. The battery pack includes a battery pack housing and the battery module according to any one of the foregoing implementations located in the battery pack housing. The explosion-proof structure and the safety compartment are disposed in the battery module in the battery pack, so that a high-temperature combustible fluid ejected from the explosion-proof structure flows into the safety compartment. Therefore, the high-temperature combustible fluid may be prevented from ejecting onto a surface of the battery module or an electrical assembly around the battery module, thereby reducing a risk of a secondary safety accident.

The battery pack further includes a battery thermal management system. The battery thermal management system is disposed on an outer side of the battery module, and is configured to cool the battery module. The battery thermal management system includes but is not limited to a liquid cooling apparatus, an air cooling apparatus, a condensate plate, and the like.

According to a third aspect, this application further provides an electronic device. The electronic device includes an electricity consumption apparatus and the battery pack, and the electricity consumption apparatus is electrically connected to the battery pack. The electronic device includes a communication base station, a data center, commercial energy storage, an electric vehicle, and the like. When the electronic device is an electric vehicle, an electricity consumption apparatus in the electric vehicle includes but is not limited to a motor, a control system, a temperature control system, and the like. Safety performance of the electronic device may be improved by using the battery pack in this application.

### BRIEF DESCRIPTION OF DRAWINGS

FIG. 1 is a schematic diagram of a structure of a battery module according to an implementation of this application;
FIG. 2 is a schematic diagram of a structure of a battery module according to an implementation of this application;
FIG. 3 is a schematic diagram of a structure in which an electrode terminal and an explosion-proof structure are disposed on different sides of a battery module according to this application;
FIG. 4 is a schematic diagram of a structure in which an electrode terminal and an explosion-proof structure are disposed on different sides of a battery module according to this application;
FIG. 5 is a schematic diagram of a structure of a battery module according to an implementation of this application;
FIG. 6 is a schematic diagram of a structure of a cover in a battery module according to an implementation of this application;
FIG. 7 is a schematic diagram of a structure of removing an explosion-proof structure from a battery module according to this application;
FIG. 8 is a schematic diagram of a structure of removing an explosion-proof structure from a battery module according to this application;
FIG. 9 is a schematic diagram of a structure of removing a safety compartment from a battery module according to an implementation of this application;
FIG. 10 is a schematic diagram of a structure of a battery module according to an implementation of this application;
FIG. 11 is a schematic diagram of a structure of a battery module according to an implementation of this application;
FIG. 12 is a schematic diagram of a structure of a fire functional layer in a battery module according to an implementation of this application;
FIG. 13 is a schematic diagram of a structure of a battery module according to an implementation of this application;
FIG. 14 is a schematic diagram of a structure of a battery module according to an implementation of this application;
FIG. 15 is a schematic diagram of a structure of a battery module according to an implementation of this application;
FIG. 16a is a schematic diagram of a structure of a battery module according to an implementation of this application;
FIG. 16b is a schematic diagram of a structure of a battery module according to an implementation of this application;
FIG. 17 is a schematic diagram of a structure of a battery module according to an implementation of this application;
FIG. 18 is a schematic diagram of a structure of a compartment bottom plate of a safety compartment in a battery module according to an implementation of this application;
FIG. 19 is a schematic diagram of a structure of a battery pack according to an implementation of this application; and
FIG. 20 is a schematic diagram of a structure of an electronic device according to an implementation of this application.

### DESCRIPTION OF EMBODIMENTS

In this specification, terms "first", "second", and the like are merely used for a purpose of description, and shall not be understood as an indication or implication of relative importance or implicit indication of a quantity of indicated technical features. Therefore, a feature limited by "first" or "second" may explicitly or implicitly include one or more features. In description of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

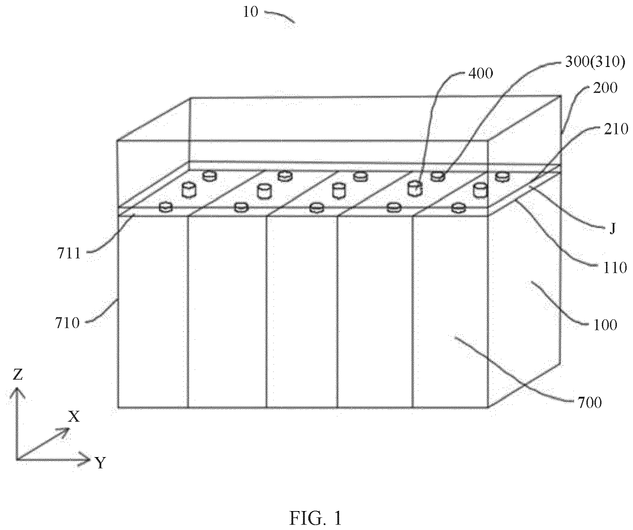

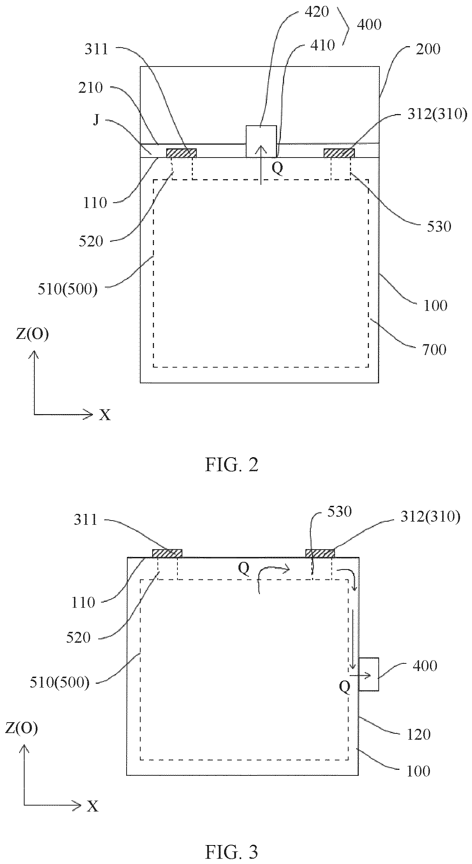

Refer to FIG. 1 and FIG. 2. An implementation of this application provides a battery module 10. The battery module 10 includes a module housing 100, a safety compartment 200, electrical assemblies 300, and explosion-proof structures 400. The safety compartment 200, the explosion-proof structures 400, and at least a part of the electrical assemblies 300 are located outside the module housing 100 and are located on a same side of the module housing 100. The explosion-proof structure 400 includes a connection end 410 and a pressure relief end 420 (as shown in FIG. 2) that are disposed opposite to each other. The connection end 410 is connected to the module housing 100, and the pressure relief end 420 is located in the safety compartment 200.

The battery module 10 further includes a cell 500 (as shown in FIG. 2) and an electrolyte. The cell 500 and the electrolyte are located in the module housing 100. A fault of the battery module 10 may induce the cell 500 and the electrolyte to generate a large amount of combustible gas, and therefore internal pressure of the module housing 100 is increased. The explosion-proof structure 400 is configured to: when the internal pressure of the module housing 100 exceeds preset opening pressure, release a high-temperature combustible fluid in the module housing 100 from the pressure relief end 420 of the explosion-proof structure 400, to avoid an explosion caused by excessively high internal pressure of the module housing 100. The pressure relief end 420 of the explosion-proof structure 400 is one end at which the high-temperature combustible fluid flows out of the explosion-proof structure 400. The high-temperature combustible fluid includes at least one of high-temperature gas or the electrolyte. The safety compartment 200 is a compartment with enclosed parts except the pressure relief end 420. When the high-temperature combustible fluid is not dangerous in the safety compartment 200, the safety compartment 200 may be opened to remove a low-temperature fluid that is not dangerous.

The electrical assembly 300 may include at least one of an electrode terminal 310, an electrical connection wire, a power wire, a sampling wire, or a sampling terminal. The electrical assembly 300 shown in FIG. 1 and FIG. 2 is the electrode terminal 310. The electrode terminal 310 is electrically connected to the cell 500, and is configured to lead out a current generated by the cell 500. When a part of the electrical assembly 300 and the explosion-proof structure 400 are located on a same side of the module housing 100, the high-temperature combustible fluid Q from the explosion-proof structure 400 may burn the electrical assembly 300 on the same side, causing a secondary safety accident. In some cases, the high-temperature combustible fluid Q from the explosion-proof structure 400 may further burn the power wire, the sampling wire, or the sampling terminal in the module housing 100, and therefore there is a high risk.

The cell 500 includes a positive plate, a negative plate, and a separator. The separator is disposed between the positive plate and the negative plate to insulate the positive plate from the negative plate. The positive plate is coated with a positive material, and the negative plate is coated with a negative material. The positive plate, the separator, and the negative plate are wound around an axial direction O to form a cell body 510 (as shown in FIG. 2). A gap exists in the cell body 510, and the gap extends in the axial direction O. A positive tab 520 and a negative tab 530 are provided at an end part that is of the cell body 510 and that is in the axial direction O. The positive tab 520 is connected to the positive plate, and the negative tab 530 is connected to the negative plate. The electrode terminal 310 includes a positive terminal 311 and a negative terminal 312. The positive terminal 311 and the negative terminal 312 are distributed at two ends of the explosion-proof structure 400 in a first direction X. In this implementation, the first direction X is a width direction of the battery module 10, the positive plate is electrically connected to the positive terminal 311 through the positive tab 520, and the negative plate is electrically connected to the negative terminal 312 through the negative tab 530. When the fault of the battery module 10 may induce the cell 500 and the electrolyte to generate a large amount of combustible gas, the large amount of combustible gas is discharged from the axial direction O of the cell body 510. In this implementation, the axial direction O of the cell body 510 is parallel to a second direction Z of the battery module 10, and the second direction Z is a height direction of the battery module 10. To enable the high-temperature combustible fluid Q to be smoothly discharged from the module housing 100, the explosion-proof structure 400 is usually disposed on an end face that is of the cell body 510 and that is in the axial direction O, the positive tab 520, the negative tab 530, and the electrode terminal 310 are also located on the end face that is of the cell body 5100 and that is in the axial direction O, and the explosion-proof structure 400 and the electrode terminal 310 are usually disposed on a same end face of the cell body 510. In this way, the high-temperature combustible fluid Q in the module housing 100 may be quickly discharged through the gap in the middle of the cell body 510 in the axial direction O. Therefore, an explosion risk is reduced.

When the explosion-proof structure 400 and the electrode terminal 310 are disposed on different sides, for example, the electrode terminal 310 is disposed on a cover 110 of the module housing 100 (as shown in FIG. 3), the explosion-proof structure 400 is disposed on a side plate 120 of the module housing 100, and the side plate 120 is perpendicular to the cover 110. In this case, an inner side of the side plate 120 includes a side face of the cell body 510. When a fault occurs in the battery module 10 and the high-temperature combustible fluid Q is generated, the high-temperature combustible fluid Q flows out from the end face of the cell body 510, turns to the side face of the cell body 510, and then is discharged through the explosion-proof structure 400 on the side plate 120. In this manner, a discharge path of the high-temperature combustible fluid Q is not smooth, and an internal explosion risk of the battery module 10 is increased.

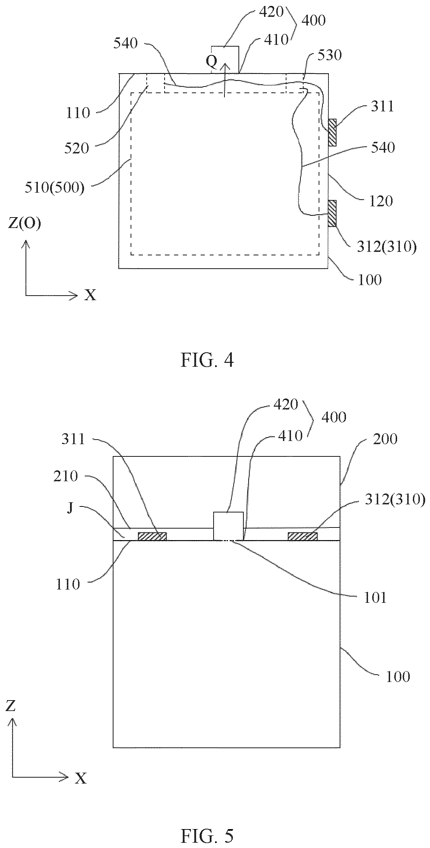

If the electrode terminal 310 is disposed on the side plate 120 of the module housing 100 (as shown in FIG. 4), and the explosion-proof structure 400 is disposed on the cover 110 of the module housing 100, the positive tab 520 and the negative tab 530 that are on the end face of the cell body 510 need to be connected to the positive terminal 311 and the negative terminal 312 that are on the side plate 120 through lead wires 540. However, adding the lead wires 540 in the module housing 100 may also increase the internal explosion risk. When the high-temperature combustible fluid Q flows in the module housing 100 and touches the lead wires 540, the explosion risk is increased.

In this application, the electrode terminal 310 and the explosion-proof structure 400 are disposed on the same side (as shown in FIG. 2), so that the explosion risk may be reduced. However, when the electrode terminal 310 and the explosion-proof structure 400 are disposed on the same side, the high-temperature combustible fluid Q from the explosion-proof structure 400 may flow to the electrode terminal 310, and sparking of the electrode terminal 310 ignites high-temperature combustible gas and liquid, causing safety accidents such as a fire or even an explosion of the battery module 10. In this application, the electrode terminal 310 and the explosion-proof structure 400 are disposed on the same side, to reduce the explosion risk. In addition, to avoid the secondary safety accident caused by the high-temperature combustible fluid Q and the electrical assembly 300 (for example, the electrode terminal 310), the pressure relief end 420 of the explosion-proof structure 400 is located in the safety compartment 200. The safety compartment 200 is a sealed cavity, and the pressure relief end 420 is disposed in the sealed safety compartment 200, so that the high-temperature combustible fluid Q from the pressure relief end 420 flows into the safety compartment 200, to prevent the high-temperature combustible fluid Q from flowing to another position of the module housing 100 to burn the electrical assembly 300. The pressure relief end 420 of the explosion-proof structure 400 is separated from the electrical assembly 300 by using the safety compartment 200, to avoid the secondary safety accident.

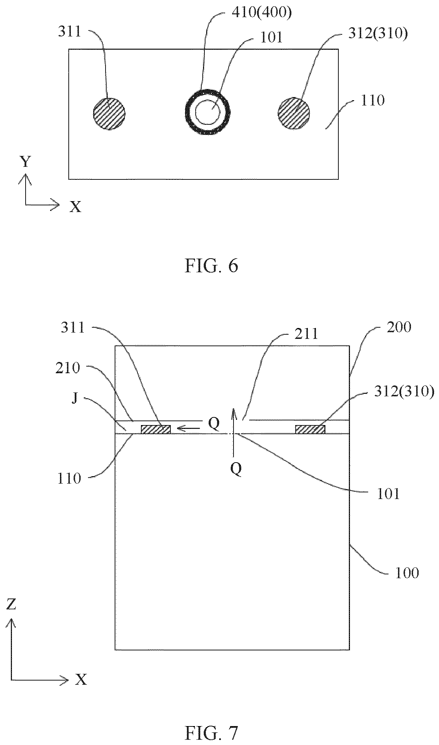

Refer to FIG. 5 and FIG. 6. In a possible implementation, the module housing 100 is provided with a first through hole 101 that penetrates through the module housing 100. The connection end 410 of the explosion-proof structure 400 is disposed around the first through hole 101, and internal space of the explosion-proof structure 400 communicates with the first through hole 101. That the connection end 410 is disposed around the first through hole 101 is that the connection end 410 is located on a circumferential outer side of the first through hole 101 (as shown in FIG. 6). The internal space of the explosion-proof structure 400 communicates with the first through hole 101, so that the high-temperature combustible fluid from the module housing 100 enters the explosion-proof structure 400 through the first through hole 101. Therefore, the high-temperature combustible fluid is effectively prevented from overflowing from a circumference of the first through hole 101, and the high-temperature combustible fluid from overflowing from a circumference of the first through hole 101 is prevented from being in contact with the electrical assembly 300. In some implementations, the connection end 410 may be fastened to the module housing 100 by welding. In some implementations, the connection end 410 may be fastened to the module housing 100 by using a high-temperature-resistant sealant, to seal a gap between the connection end 410 and the module housing 100.

If the explosion-proof structure 400 is not disposed, and the safety compartment 200 is directly disposed on the cover 110 of the module housing 100 (as shown in FIG. 7), a compartment bottom plate 210 that is of the safety compartment 200 and that is adjacent to the module housing 100 is provided with a second through hole 211. Axes of the first through hole 101 and the second through hole 211 coincide, so that an internal part of the module housing 100 communicates with the safety compartment 200 through the first through hole 101 and the second through hole 211. However, because the electrode terminal 310 has a specific height, there is a gap J between the compartment bottom plate 210 and the module housing 100. Therefore, it is difficult to fully fit the compartment bottom plate 210 with the module housing 100, and when the high-temperature combustible fluid Q is ejected from the module housing 100, the high-temperature combustible fluid Q may flow out from the gap J between the compartment bottom plate 210 and the module housing 100. Further, the high-temperature combustible fluid Q may be in contact with the electrical assembly 300 that is on the module housing 100 to damage the electrical assembly 300. The high-temperature combustible fluid Q may further damage an electronic component around the module housing 100, for example, a power wire. In addition, because there is no blocking structure around the circumference of the first through hole 101, the high-temperature combustible fluid Q may further flow back to the first through hole 101 and enter the battery module housing 100, causing a secondary safety accident.

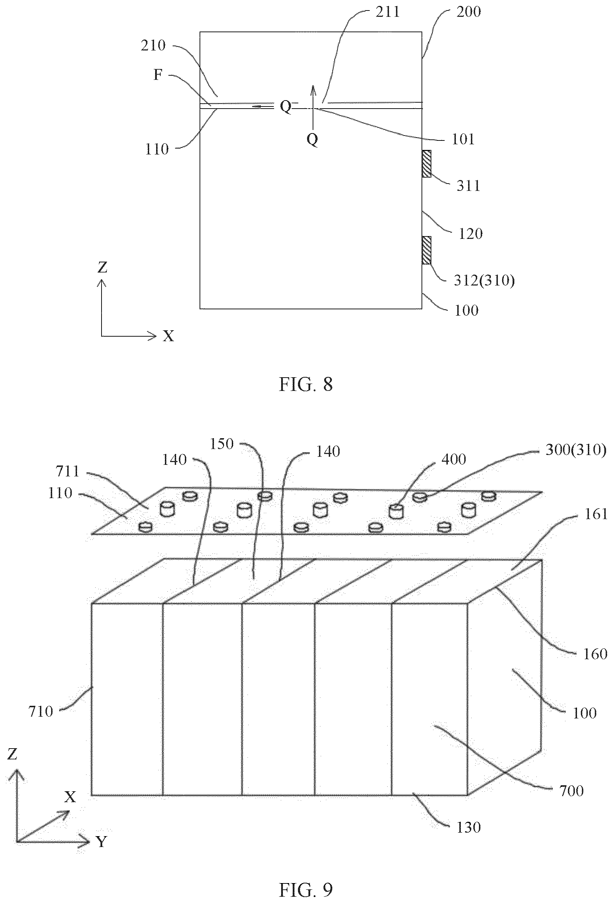

If the electrode terminal 310 is disposed on the side plate 120 of the module housing 100 (as shown in FIG. 8), it is also difficult to fully fit the compartment bottom plate 210 with the module housing 100, and there is still a gap F at a location at which the first through hole 101 is adjacent to the second through hole 211. When the high-temperature combustible fluid Q is ejected from the first through hole 101, some of the high-temperature combustible fluid Q may flow out from the gap F, and may be in contact with the electrical assembly 300 on the module housing 100 to damage the electrical assembly 300. In addition, the high-temperature combustible fluid Q may further flow back to the first through hole 101 and enter the battery module housing 100, causing the secondary safety accident. Furthermore, in this implementation, a lead wire needs to be disposed between the cell body 510 and the electrode terminal 310, and therefore, an internal explosion risk may be increased. However, in this implementation, the connection end 410 of the explosion-proof structure 400 is disposed around the first through hole 101 (as shown in FIG. 5 and FIG. 6), so that the high-temperature combustible fluid Q may be effectively prevented from overflowing from the circumference of the first through hole 101.

Still refer to FIG. 1. In a possible implementation, the module housing 100 includes the cover 110. The electrical assemblies 300 and the explosion-proof structures 400 are disposed on the cover 110, and the explosion-proof structures 400 and the cover 110 are of an integrated structure. The explosion-proof structures 400 and the cover 110 are of the integrated structure, so that the gap between the connection end 410 of the explosion-proof structure 400 and the module housing 100 is removed, and the high-temperature combustible fluid is prevented from overflowing from the circumference of the first through hole 101. In this implementation, the battery module 10 includes a plurality of independent battery cells 700. The plurality of battery cells 700 are arranged in a third directi on Y. The third direction Y is a length direction of the battery module 10. Each battery cell 700 includes a cell sub-housing 710, a cell 500 (as shown in FIG. 2) located in the cell sub-housing 710, and an electrolyte. The module housing 100 includes a plurality of cell sub-housings 710 (as shown in FIG. 1), and each cell sub-housing 710 includes a cell sub-cover 711. The plurality of cell sub-covers 711 of the plurality of cell sub-housings 710 form the cover 110 of the module housing 100. Each cell sub-cover 711 is provided with the explosion-proof structure 400, and each cell sub-cover 711 and the explosion-proof structure 400 on the cell sub-cover 711 are of an integrated structure. In some implementations, the third direction Y is a width direction of the battery module 10, and the first direction X is the length direction of the battery module 10.

In some implementations, the module housing 100 includes the cover 110, a box frame 160, and a bottom plate 130 (as shown in FIG. 9). Two ends of the box frame 160 are provided with openings 161 that are respectively covered by the cover 110 and the bottom plate 130. A plurality of spacers 140 are provided in the box frame 160. The plurality of spacers 140 divide the box frame 160 into a plurality of accommodation space 150, and the cell 500 and the electrolyte are disposed in each accommodation space 150. Two adjacent spacers 140, a part of the box frame 160 between the two adjacent spacers 140, and the cell 500 and the electrolyte that are in the accommodation space 150 form the battery cell 700. The cover 110 covers the opening 161 of the box frame 160. In this implementation, the cell sub-covers 711 of the plurality of battery cells 700 are of an integrated structure, that is, the cover 110. The explosion-proof structure 450 is disposed at a location of the cover 110 corresponding to each accommodation space 150.

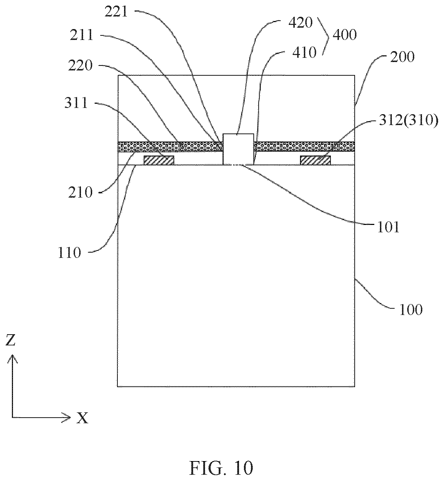

Refer to FIG. 10. In a possible implementation, the safety compartment 200 includes a compartment bottom plate 210 adjacent to the module housing 100, a fire functional layer 220 disposed on a surface that is of the compartment bottom plate 210 and that is away from the module housing 100, and a second through hole 211 that penetrates the compartment bottom plate 210 and the fire functional layer 220. A part of the explosion-proof structure 400 is located in the second through hole 211. The fire functional layer 220 is configured to perform fire processing on high-temperature combustible gas, and includes at least one of functions of cooling the high-temperature combustible gas, extinguishing a fire, absorbing toxic gas, and the like. In this implementation, that a part of the explosion-proof structure 400 is located in the second through hole 211 includes the pressure relief end 420 of the explosion-proof structure 400 extends from the second through hole 211 and extends into internal space of the safety compartment 200. In other words, the pressure relief end 420 is fully located in the internal space of the safety compartment 200, and the pressure relief end 420 is higher than the second through hole 211. Due to blocking of the pressure relief end 420 of the explosion-proof structure 400, the high-temperature combustible fluid from the pressure relief end 420 does not flow back to the second through hole 211 after falling onto the fire functional layer 220, and is effectively blocked by the pressure relief end 420 of the explosion-proof structure 400 in the safety compartment 200.

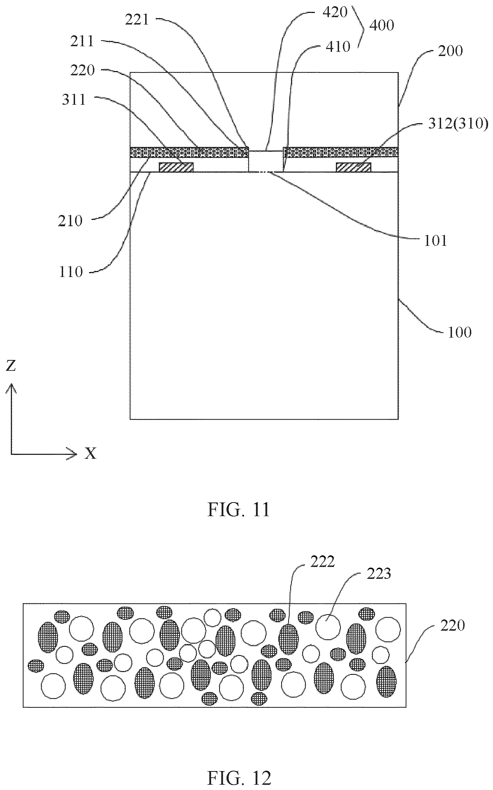

Refer to FIG. 11. In some implementations, that a part of the explosion-proof structure 400 is located in the second through hole 211 includes the pressure relief end 420 of the explosion-proof structure 400 is located in the second through hole 211 and does not extend into the internal space of the safety compartment 200. In other words, the pressure relief end 420 is surrounded by a material of the fire functional layer 220. When the high-temperature combustible fluid is discharged from the pressure relief end 420, in a process of discharging from the second through hole 211 to the safety compartment 200, fire processing may be performed on the high-temperature combustible fluid by the material of the fire functional layer 220 that is on an inner wall of the second through hole 211, and then the high-temperature combustible fluid enters the safety compartment 200 and falls onto a surface of another fire functional layer 220 to be processed. In this way, fire processing may be effectively performed on the high-temperature combustible fluid. If some of the high-temperature combustible fluid flow back to the second through hole 211, because the inner wall of the second through hole 211 is also provided with the material of the fire functional layer 220, the high-temperature combustible fluid may be processed by the material of the fire functional layer 220 again when flowing through the inner wall of the second through hole 211, and therefore, a secondary safety accident caused by the backflow is avoided.

Refer to FIG. 12. In some implementations, the fire functional layer 220 includes filter particles 222 and energy-absorbing particles 223, and the filter particles 222 are distributed between the energy-absorbing particles 223. The filter particles 222 are filter material particles that can absorb harmful gas and convert the harmful gas into harmless gas, and the energy-absorbing materials 223 are energy-absorbing material particles that can convert high-temperature gas into low-temperature gas. The amount of the filter particles 222 and the amount of the energy-absorbing particles 223 may be set as required. In some implementations, a material of the filter particles 222 and a material of the energy-absorbing particles 223 may be directly mixed, and then solidified to form the fire functional layer 220.

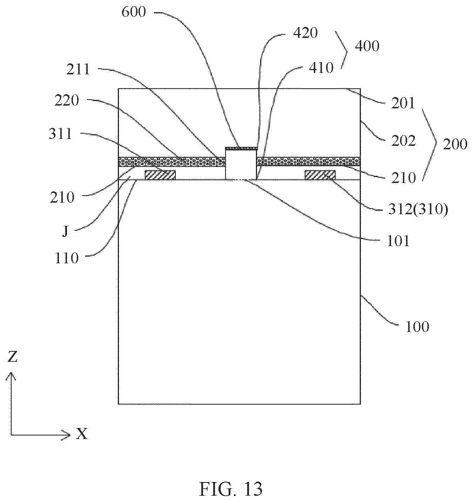

Refer to FIG. 13. In a possible implementation, the battery module 10 further includes a breakable structure 600, and the breakable structure 600 is located on an end face of the pressure relief end 420 of an explosion-proof structure 400. In this implementation, the second through hole 211, the connection end 410 of the explosion-proof structure 400, and the internal space of the explosion-proof structure 400 communicate with each other sequentially. The breakable structure 600 explodes after being impacted by pressure. After the breakable structure 600 explodes, a fluid in a module housing 100 is ejected into a safety compartment 200 through the pressure relief end 420. The breakable structure 600 is a structure that may explode when being impacted by pressure. When the battery module 10 works normally, the breakable structure 600 blocks the end face of the pressure relief end 420 of the explosion-proof structure 400. When internal pressure of the battery module 10 increases, the high-temperature combustible fluid breaks the breakable structure 600, and the high-temperature combustible fluid is ejected into the safety compartment 200.

In a possible implementation, the breakable structure 600 includes a connection plate and a score located on the connection plate. A thickness of the score is less than a thickness of another part of the connection plate, and the thickness is a size in a direction perpendicular to the connection plate. When being impacted by pressure, the score may be broken to release the pressure.

Still refer to FIG. 13. In this implementation, the safety compartment 200 includes a compartment bottom plate 210, a compartment top plate 201, and a box frame 202 that is provided with openings at two ends in a second direction Z. The compartment bottom plate 210 and the compartment top plate 201 respectively cover the openings at the two ends of the box frame 202 in the second direction Z. The compartment bottom plate 210 is located on one side of the module housing 100 in the second direction Z. The compartment bottom plate 210 is provided with the second through hole 211 that penetrates through the compartment bottom plate 210. The pressure relief end 420 of the explosion-proof structure 400 passes through the second through hole 211 and extends into the safety compartment 200. The compartment bottom plate 210, the compartment top plate 201, the box frame 202, and the breakable structure 600 can form enclosed space. When the breakable structure 600 is not broken, the breakable structure 600 blocks the pressure relief end 420 of the explosion-proof structure 400. In this case, the compartment bottom plate 210, the compartment top plate 201, the box frame 202, and the explosion-proof structure 400 form the enclosed space. When the breakable structure 600 is broken by pressure, the high-temperature combustible fluid is released to the safety compartment 200. In this case, the pressure relief end 420 is an inlet of the safety compartment 200, and another part of the safety compartment 200 have no outlet, so that the high-temperature combustible fluid is accommodated in the safety compartment 200 to avoid overflow. When the high-temperature combustible fluid is not dangerous after fire processing is performed on the high-temperature combustible fluid in the safety compartment 200, the compartment top plate 201 of the safety compartment 200 may be opened to remove a low-temperature fluid that is not dangerous.

In a possible implementation, the explosion-proof structure 400 and the safety compartment 200 are of an integrated structure. Specifically, the explosion-proof structure 400 and the compartment bottom plate 210 are of an integrated structure. The integrated structure may eliminate a gap between the explosion-proof structure 400 and the compartment bottom plate 210, avoid leakage of the high-temperature combustible fluid, and improve structural strength.

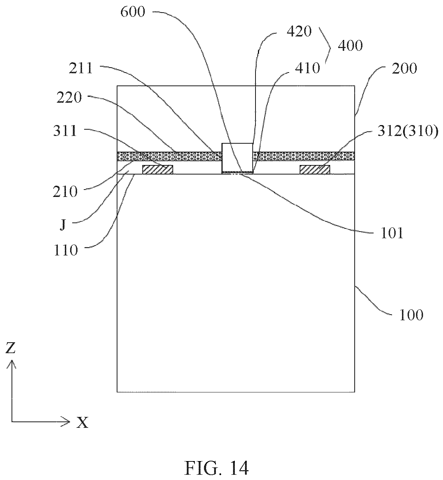

Refer to FIG. 14. In a possible implementation, the battery module 10 further includes a breakable structure 600, and the breakable structure 600 is located on an end face of the connection end 410 of an explosion-proof structure 400. When the battery module 10 works normally, the breakable structure 600 blocks the end face of the connection end 410 of the explosion-proof structure 400. When internal pressure of the battery module 10 increases, after breaking the breakable structure 600, a high-temperature combustible fluid passes through internal space of the explosion-proof structure 400, and the high-temperature combustible fluid is ejected into a safety compartment 200 from an outlet of a pressure relief end 420.

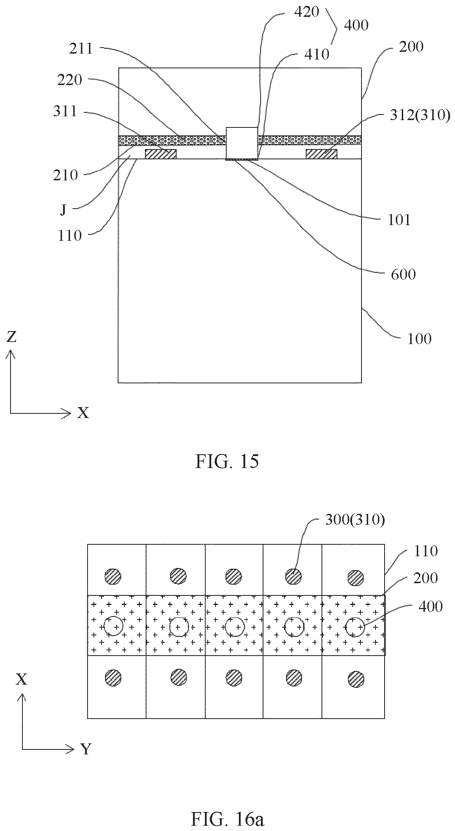

Refer to FIG. 15. In a possible implementation, the battery module 10 further includes a breakable structure 600. The breakable structure 600 is located on a surface of the module housing 10, and blocks the first through hole 101. In this implementation, an edge of the breakable structure 600 is connected to a surface of a cover 110 that is on a circumference of a first through hole 101, and a connection end 410 of an explosion-proof structure 400 surrounds an outer side of the thin film structure 600. When internal pressure of the battery module 10 increases, after breaking the breakable structure 600, a high-temperature combustible fluid passes through internal space of the explosion-proof structure 400, and the high-temperature combustible fluid is ejected into a safety compartment 200 from an outlet of a pressure relief end 420. The connection end 410 of the explosion-proof structure 400 is connected to the cover 110, so that the high-temperature combustible fluid from the first through hole 101 cannot flow to an outer side of the explosion-proof structure 400. Therefore, a risk of burning an electrical assembly 300 by the high-temperature combustible fluid may be reduced.

Still refer to FIG. 1 and FIG. 2. In a possible implementation, the electrical assemblies 300 are located in an area between the safety compartment 200 and the module housing 100. The electrical assembly 300 may be connected to an external electronic component by using a connection wire, to implement an electrical connection between the module housing 100 and the external electronic component. For example, when the electrical assembly 300 is the electrode terminal 310, the electrode terminal 310 is disposed on the cover 110, one end of the electrode terminal 310 is electrically connected to an electrode plate that is in the battery cell 700 by using a tab, and the other end of the electrode terminal 310 is connected to a general electrode of the battery module 10 by using the electrical connection wire, or is connected in series or in parallel to an electrode terminal 310 that is in an adjacent battery cell 700.

In an implementation, the safety compartment 200 fully covers the cover 110. Sizes of the safety compartment 200 in the first direction X and the third direction Y are the same as sizes of the cover 110 in the first direction X and the third direction Y, so that process preparation is simpler. An edge of the safety compartment 200 is fastened to an edge of the cover 110, and a fastening manner includes fastening by using a buckle, a screw, an adhesive, or the like. Because the safety compartment 200 is disposed above the electrical assembly 300, there is at least a size of the electronic assembly 300 in the second direction Z between the safety compartment 200 and the cover 110. In addition, space for placing the connection wire for connecting the electrical assembly 300 to the outside needs to be reserved between the safety compartment 200 and the electrical assembly 300, so that a gap between the safety compartment 200 and the cover 110 is larger. If the explosion-proof structure 400 is not disposed, the high-temperature combustible fluid from the first through hole 101 quickly flows to the electrical assembly 300 to burn the electrical assembly 300, causing a secondary safety accident. However, in this application, the explosion-proof structure 400 is disposed, so that the secondary safety accident may be avoided.

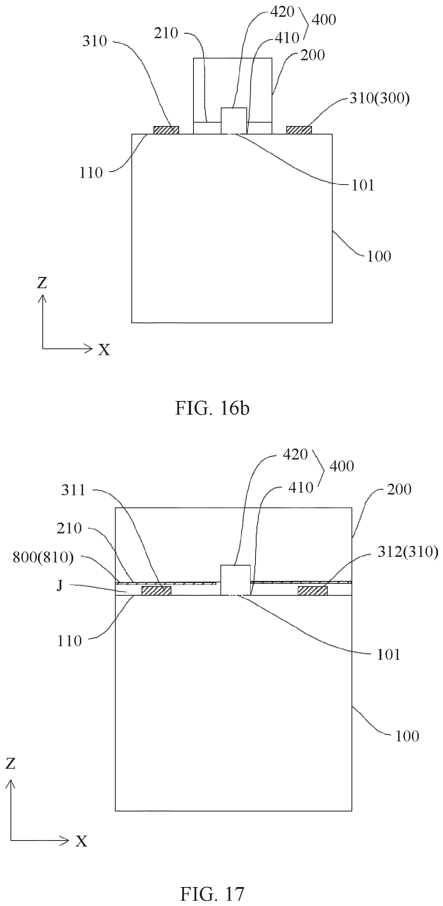

Refer to FIG. 16a and FIG. 16b. In a possible implementation, orthographic projections of the electrical assemblies 300 on the module housing 100 do not overlap an orthographic projection of the safety compartment 200 on the module housing 100. In this implementation, the safety compartment 200 is not located above the electrode terminal 310, and space is reserved for a connection wire of the electrode terminal 310.

Refer to FIG. 17. In a possible implementation, the battery module 10 further includes a cooling apparatus 800. The cooling apparatus 800 is disposed outside the safety compartment 200, and is configured to cool the safety compartment 200. The cooling apparatus 800 includes an air cooling apparatus or a liquid cooling apparatus. The liquid cooling apparatus 800 includes a cooling pipe 810. Because the high-temperature combustible fluid Q may fall onto the compartment bottom plate 210 after being ejected into the safety compartment 200, a temperature of the compartment bottom plate 210 is high. As shown in FIG. 17, in an implementation, the cooling pipe 810 is arranged on a surface that is of the compartment bottom plate 210 of the safety compartment 200 and that is adjacent to a cover 110, to quickly cool the compartment bottom plate 210. In some implementations, the air cooling apparatus may be a fan, and may dissipate heat by blowing the safety compartment 200.

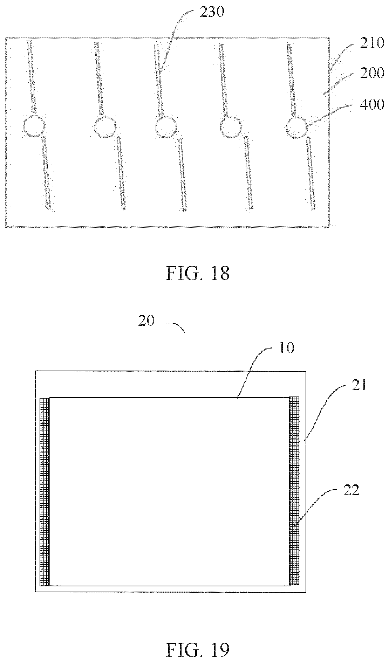

Refer to FIG. 18. In a possible implementation, liquid guiding grooves 230 are further provided on an inner surface of the compartment bottom plate 210. One end of the liquid guiding groove 230 is provided adjacent to the explosion-proof structure 400, and the other end of the liquid guiding groove 230 is provided away from the explosion-proof structure 400. After the high-temperature combustible fluid ejected from the pressure relief end 420 of the explosion-proof structure 400 falls onto the compartment bottom plate 210, the high-temperature combustible fluid flows in a direction away from the explosion-proof structure 400 by using the liquid guiding groove 230, to prevent the high-temperature combustible fluid from gathering around the explosion-proof structure 400. Therefore, effect for performing fire processing on the high-temperature combustible fluid is improved. A quantity of the liquid guiding grooves 230 and a shape of the liquid guiding groove 230 are not limited, and may be specifically set according to an actual requirement.

Refer to FIG. 19. An implementation of this application further provides a battery pack 20. The battery pack 20 includes a battery pack housing 21 and the battery module 10 according to any one of the foregoing implementations located in the battery pack housing 21. The explosion-proof structure 400 and the safety compartment 200 are disposed in the battery module 10 in the battery pack 20, so that a high-temperature combustible fluid ejected from the explosion-proof structure 400 flows into the safety compartment 200. Therefore, the high-temperature combustible fluid may be prevented from ejecting onto a surface of the battery module 20 or an electrical assembly 300 around the battery module 20, thereby reducing a risk of a secondary safety accident.

The battery pack 20 further includes a battery thermal management system 22. The battery thermal management system 22 is disposed on an outer side of the battery module 10, and is configured to cool the battery module 10. The battery thermal management system 22 includes but is not limited to a liquid cooling apparatus, an air cooling apparatus, a condensate plate, and the like.

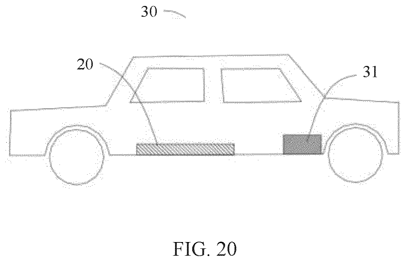

Refer to FIG. 20. An implementation of this application further provides an electronic device 30. The electronic device 30 includes an electricity consumption apparatus 31 and the battery pack 20 described above, and the electricity consumption apparatus 31 is electrically connected to the battery pack 20. The electronic device 30 includes a communication base station, a data center, commercial energy storage, an electric vehicle, and the like. When the electronic device 30 is an electric vehicle, an electricity consumption apparatus in the electric vehicle includes but is not limited to a motor, a control system, a temperature control system, and the like. Safety performance of the electronic device 30 may be improved by using the battery pack 20 in this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A battery module, wherein the battery module comprises a module housing, a safety compartment, electrical assemblies, and explosion-proof structures, the safety compartment, the explosion-proof structures, and at least a part of the electrical assemblies are located outside the module housing and are located on a same side of the module housing, the explosion-proof structure comprises a connection end and a pressure relief end that are disposed opposite to each other, the connection end is connected to the module housing, and the pressure relief end is located in the safety compartment.

2. The battery module according to claim 1, wherein the module housing is provided with a first through hole that penetrates through the module housing, the connection end of the explosion-proof structure is disposed around the first through hole, and internal space of the explosion-proof structure communicates with the first through hole.

3. The battery module according to claim 2, wherein the module housing comprises a cover, the electrical assemblies and the explosion-proof structures are disposed on the cover, and the explosion-proof structures and the cover are of an integrated structure.

4. The battery module according to claim 1, wherein the safety compartment comprises a compartment bottom plate adjacent to the module housing, a fire functional layer disposed on a surface that is of the compartment bottom plate and that is away from the module housing, and a second through hole that penetrates through the compartment bottom plate and the fire functional layer, and a part of the explosion-proof structure is located in the second through hole.

5. The battery module according to claim 4, wherein the pressure relief end of the explosion-proof structure extends from the second through hole and extends into internal space of the safety compartment.

6. The battery module according to any one of claims 1 to 3, wherein the battery module further comprises a breakable structure, and the breakable structure is located on an end face of the pressure relief end of the explosion-proof structure.

7. The battery module according to any one of claims 1 to 5, wherein the battery module further comprises a breakable structure, and the breakable structure is located on an end face of the connection end of the explosion-proof structure.

8. The battery module according to claim 2 or 3, wherein the battery module further comprises a breakable structure, and the breakable structure is located on a surface of the module housing, and blocks the first through hole.

9. The battery module according to any one of claims 6 to 8, wherein the breakable structure explodes after being impacted by pressure, and after the breakable structure explodes, a fluid in the module housing is ejected into the safety compartment through the pressure relief end.

10. The battery module according to any one of claims 6 to 9, wherein the breakable structure comprises a connection plate and a score located on the connection plate, a thickness of the score is less than a thickness of another part of the connection plate, and the thickness is a size in a direction perpendicular to the connection plate.

11. The battery module according to claim 1, wherein the electrical assemblies are in an area between the safety compartment and the module housing, or orthographic projections of the electrical assemblies on the module housing do not overlap an orthographic projection of the safety compartment on the module housing.

12. A battery pack, wherein the battery pack comprises a battery pack housing and the battery module according to any one of claims 1 to 11 located in the battery pack housing.

13. An electronic device, wherein the electronic device comprises an electricity consumption apparatus and the battery pack according to claim 12, and the electricity consumption apparatus is electrically connected to the battery pack.
